# EUROPÄISCHE PATENTSCHRIFT

(11) **EP 1 509 564 B1**
(45) Veröffentlichungstag und Bekanntmachung des Hinweises auf die Patenterteilung: **26.03.2008**
(21) Anmeldenummer: 03735425.5
(22) Anmeldetag: 21.05.2003
(51) Int. Cl.: C08J 5/18, B32B 27/32

(54) **TRANSPARENTE POLYOLEFINFOLIE MIT UV BARRIERE**
TRANSPARENT POLYOLEFIN FILM HAVING A UV BARRIER
PELLICULE POLYOLEFINIQUE TRANSPARENTE COMPORTANT UNE BARRIERE AUX UV

(30) Priorität: 23.05.2002 DE 10222965
(43) Veröffentlichungstag der Anmeldung: 02.03.2005
(73) Patentinhaber: Treofan Germany GmbH & Co.KG, 66539 Neunkirchen (DE)
(72) Erfinder: BUSCH, Detlef, 66740 Saarlouis (DE); KOCHEM, Karl-Heinz, 66539 Neunkirchen (DE); SCHMITZ, Bertram, 5720 Sareguemines (FR); HÄDE, Petra, 66117 Saarbrücken (DE)
(86) Internationale Anmeldenummer: PCT/EP2003/005302
(87) Internationale Veröffentlichungsnummer: WO 2003/099911

(56) Entgegenhaltungen:
- US-A- 4 927 464
- US-A- 5 391 609

## Beschreibung

Die vorliegende Erfindung betrifft eine biaxial verstreckte Polyolefinfolie mit guter UV Barriere, die gleichzeitig eine hohe Transparenz und hohe Glanzwerte aufweist.

Im Stand der Technik sind Folien aus Polyolefinen bekannt, welche für bestimmte Anwendungszwecke biaxial orientiert werden und im allgemeinen einen Dicke im Bereich von 3 bis 100 µm haben. Solche biaxial orientierten Folien werden durch geeignete Zusätze modifiziert, um beispielsweise die Reibung, die Antistatik, die thermische Stabilität oder andere Folieneigenschaften zu verbessern. Diese Zusätze dürfen jedoch andere wichtige Gebrauchseigenschaften, wie z.B. Glanz und Trübung, nicht negativ beeinflussen. Diese Folien werden in verschiedensten Bereichen eingesetzt. Eine wichtige Rolle spielt die Verpackung von Lebensmittel aller Art.

Zur Verpackung von verderblichen, insbesondere fetthaltigen Lebensmitteln werden im allgemeinen opake oder metallisierte Folien eingesetzt. Die Opazität bzw. die Metallisierung stellt sicher, daß das verpackte Lebensmittel keinem schädlichen Einfluß durch UV Strahlung ausgesetzt wird. Bekanntlich begünstigt die UV Strahlung die Oxidation der ungesättigten Fettsäuren und führt so schnell zu einer Beeinträchtigung der Lebensmittelqualität, bis hin zu einem ranzigen Aroma des betreffenden Lebensmittels.

Auch in anderen Anwendungen ist die schädliche Einwirkung von UV Strahlung unerwünscht, z.B. das Ausbleichen von gefärbten Gebrauchsgütern die intensiver Sonnenstrahlung ausgesetzt sind. Dies tritt beispielsweise bei Textilien oder anderen Auslagen in Schaufenstern oder in Ausstellungsräumen mit wertvollen Kunstgegenständen, wie Bildern, Teppichen etc. auf.

Ein wirksamer Schutz vor UV Strahlung bei Lebensmittelverpackungen ist bisher nur möglich, in dem man die Folien metallisiert oder einfärbt und damit das gesamte Lichtspektrum ausfiltert. Naturgemäß ist es dann nicht mehr möglich das verpackte Gut zu sehen. Weiterhin weisen opake Folien nicht mehr den gewünschten hohen Glanz auf, der für eine werbewirksame attraktive Verpackung gefordert wird. Metallisierte Folien erfordern einen zusätzlichen Verarbeitungsschritt, die Metallisierung, welcher die Verpackung zusätzlich verteuert. Es besteht daher ein Bedürfnis nach biaxial verstreckten Polypropylenfolien, welche eine gute UV Barriere aufweisen, die nach wie vor transparent sind.

Zur Lösung diese Problems wurden in der Vergangenheit verschiedene UV Absorber entwickelt, wie z.B. Benzophenon, die zwar zu einer transparenten Folie führen, aber bei den für boPP Folien üblichen geringen Foliendicke (d.h. kleiner als 100µm) nicht ausreichend UV Strahlung absorbieren. Für eine effektive UV-Absorption muß die Konzentration so hoch sein, daß es zu einer Überladung der Polymermatrix kommt. Das bedeutet wiederum, daß das Additiv aus der Folie migriert und diese somit für den Bereich Lebensmittelverpackung nicht mehr anwendbar ist.

Im Stand der Technik sind Modifizierungen von polymeren Materialien mit nanoskaligen Zusatzstoffen bekannt. Derartige Materialien enthalten einen nanoskaligen Zusatzstoff, welcher bestimmte Gebrauchseigenschaften dieser Polymeren verbessert.

In dem Patent US 5,391,609 sind transparente Folien beschrieben, welche durch Zusatz von nanoskaligem Titandioxid eine UV Barriere aufweisen. Es ist beschrieben, daß die nanoskaligen Titandioxidteilchen einen durchschnittlichen Teilchendurchmesser von 0,01 bis 0,05 µm aufweisen sollen. Nach den Beispielen wird die UV Transmission durch Zusatz dieser Nanopartikel auf unter 10% gesenkt. Diesen Folien haftet der Nachteil an, daß die nanoskaligen Tititandioxid Teilchen bei der Einarbeitung in die Folien zu größeren Teilchen agglomerieren und in der Folie nicht mehr als nanoskalige Partikel vorliegen. Hierdurch wird insbesondere die Trübung der Folie nachteilig beeinflußt. Teilweise ist die Optik auch durch Stippen oder ähnliche optische Ungleichmäßigkeiten beeinträchtigt.

US 4,927,464 beschreibt UV absorbierendes TiO2 mit einer Beschichtung zur Verbesserung der Dispergierbarkeit des TiO2. Es ist erwähnt, daß dieses TiO2 in Polyolefine eingearbeitet werden kann. Es wird eine einschichtige Folie mit diesem TiO2 beschrieben. Eine Folie mit einer TiO2-haltigen Zwischenschicht geht aus diesem Dokument nicht hervor.

Die Aufgabe der vorliegenden Erfindung bestand darin, eine biaxial orientierte Polyolefinfolie zur Verfügung zu stellen, welches sich einerseits durch eine gute UV Barriere auszeichnet und gleichzeitig hohe Transparenz und hohen Glanz aufweisen soll. Dabei dürfen die übrigen wichtigen Gebrauchseigenschaften von biaxial orientierten Verpackungsfolien, wie mechanische Festigkeit, Siegelbarkeit, Wasserdampfbarriere etc. nicht beeinträchtigt werden.

Diese Aufgabe wird gelöst durch eine transparente biaxial orientierte Polyolefinfolie, welche in mindestens einer Schicht nanoskaliges Titandioxid enthält, wobei der Gesamtgehalt an nanoskaligem Titandioxid in der Folie in einem Bereich von 0,5 bis 1,5 Gew.-%, bezogen auf das Gesamtgewicht der Folie liegt und wobei die Titandioxid Partikel eine Beschichtung aufweisen und die Folie mehrschichtig ist und eine Zwischenschicht aufweist, welche 2 bis 5 Gew.-% TiO₂, bezogen auf das Gewicht der Zwischenschicht, enthält und diese Zwischenschicht eine Dicke von 1-10µm aufweist.

Die erfindungsgemäßen biaxial orientierten Folien weisen bei hoher Transparenz und gutem Glanz eine effektive W Barriere auf. Eine UV Barriere liegt im Sinne der vorliegenden Erfindung vor, wenn die Folie in einem Wellenlängenbereich von 200 bis 320nm weniger als 30% Transmission, vorzugsweise weniger als 20% Transmission aufweist. Überraschenderweise zeigen die Folien gleichzeitig eine überraschend hohe Transparenz. Im allgemeinen liegt die Trübung in einem Bereich von 1 bis 8, vorzugsweise 2 bis 6, insbesondere 2 bis 5.

Des weiteren zeigen die Folien eine gleichmäßige Optik ohne Fehlstellen, wie Flecken oder Einschlüsse und genügen den hohen Anforderungen die an die Optik der transparenten Verpackungsfolien gestellt werden.

Unter UV-Strahlung wird im Sinne der vorliegenden Erfindung Strahlung mit einer Wellenlänge im Bereich von 200 bis 320nm verstanden. UV-Barriere-Folie sind im Sinne der vorliegende Erfindung Folien, bei denen die Transmission von UV Strahlung weniger als 30% beträgt, vorzugsweise in einem Bereich von 3 bis 25%, insbesondere 5 bis 20% liegt

Es ist erfindungswesentlich, daß die transparenten Folie ein beschichtetes nanoskaliges Titandioxid in einer Menge von 0,5 bis 1,5 Gew.-%, insbesondere 0,6 bis 1,2 Gew.-%, bezogen auf das Gesamtgewicht der Folie, enthält. Nanoskalig bedeutet im Sinne der vorliegenden Erfindung eine mittlere Teilchengröße von weniger als 30nm, vorzugsweise 10 bis 25nm, insbesondere 15 bis 20nm. Es wurde gefunden, daß mit weniger als 0,4 Gew.-% TiO₂ in der Folie die UV Absorption gegenüber einer unmodifizierten Folie nur unwesentlich erhöht wird, d.h. die Transmission für Licht im Wellenlängenbereich von <320nm liegt noch immer bei ca. über 40%. Des weiteren wurde gefunden, daß sich bei einer Erhöhung des TiO₂-Anteils in der Folie auf über 1,2 Gew.-% die UV Absorption nur noch unwesentlich erhöht, gleichzeitig aber die Trübung trotz der Beschichtung überproportional ansteigt Überraschenderweise zeigen die Folien mit einem TiO₂ Anteil im Bereich von nur 0,5 bis 1,5 Gew.-% bereits eine hervorragende UV- Barriere, d.h. die Transmissions-Werte liegen unter 30%. Überraschenderweise wird die Trübung der biaxial orientierten Folie durch das nanoskalige TiO₂ nur unwesentlich beeinträchtigt Es wurde gefunden, daß sich die Trübungswerte durch den Zusatz von 0,5 bis 1,2 Gew.-% TiO₂ gegenüber Folien mit identischer Struktur und Zusammensetzung aber ohne TiO₂ maximal vervierfachen. Dies ist insbesondere in Anbetracht der Tatsache überraschend, daß TiO₂ normalerweise ein gängiges Additiv in oPP-Folien ist, welches zur Weißfärbung von Folien oder bei vakuolenhaltigen Folien zur Erhöhung des Weißgrades eingesetzt wird. Derartige TiO₂ Teilchen weisen im allgemeinen eine mittlere Teilchengröße von 100 bis 200nm auf und führen in geringsten Menge zu einem völligen Zusammenbruch der Trübungswerte. Wenngleich auf Grund der Teilchengröße des nanoskaligen TiO2 keine Weißeinfärbung der Folie zu erwarten war, wurde mit einer erheblichen Beeinträchtigung von Glanz und Trübung gerechnet.
Es ist bekannt, daß unverträgliche Zusatzstoffe in dünnen biaxial orientierten Folien viele Grenzflächen erzeugen, an denen eindringendes Licht gebeugt oder gestreut wird und daher eine erhebliche Beeinträchtigung von Glanz und Trübung die Folge ist
Es wurde gefunden, daß es zur Erhaltung der hohen Transparenz wesentlich ist, daß das nanoskalige Titandioxid auch nach der Einarbeitung in die biaxial verstreckte Folie in einer solchen feinsten Verteilung vorliegen muß. Das bedeutet, daß das TiO₂ bei der Verarbeitung im Folienherstellungsprozeß nicht zu größeren Partikelgrößen agglomerieren darf. Derartige Agglomerationen sind von herkömmlichem TiO₂ und anderen unverträglichen Zusatzstoffen bekannt, Es wurde erwartet, daß die Agglomerationen gerade bei dem besonders feinen nanoskaligem TiO₂ verstärkt auftritt und somit eine erhebliche Eintrübung der Folie und optische Ungleichmäßigkeiten nicht vermieden werden können. Ein derartiger Effekt wurde auch bei der Nacharbeitung des Standes der Technik (US 5,391,609 ) festgestellt.

Erfindungsgemäß ist das nanoskalige TiO₂ daher mit einer Beschichtungen versehen, welche zusätzlich dazu beiträgt unerwünschte Agglomerationen zu verhindern. Geeignete Beschichtungen sind beispielsweise aus organischen Verbindungen wie Fettsäuren, z.B. Stearinsäure, Stearate oder ähnliche, die die Kompatibilität zur Polymermatrix verbessern und die Einarbeitung und Dispergierung des Pigmentes in der Polymermatrix unterstützen. Derartige organische Beschichtungen könne gegebenenfalls mit einer anorganischen Komponente kombiniert werden. Für die vorliegende Erfindung ist nano-Titandioxid mit einer Al2O3-Beschichtung und dem zusätzlichen organischem Coating, vorzugsweise aus Stearinsäure, besonders geeignet Verfahren zur Beschichtung von Partikeln sind an sich im Stand der Technik bekannt und bereits im Zusammenhang mit der Beschichtung von herkömmlichen Titandioxiden umfangreich beschrieben.

Zur Herstellung von nanoskaligen Materialien können unterschiedliche Verfahren eingesetzt werden. Prinzipiell erhält man Nanostrukturen entweder durch gezielten Zusammenbau einzelner Atome oder entsprechend durch Verkleinern bestehender mikroskaliger Strukturen. Hierbei hat erstes doch weitaus größere Bedeutung. Die beiden hauptsächlich angewandten Herstellungsverfahren sind nasschemische Verfahren, darunter fallen Hydrothermal-, Fällungs-, Sprühtrocknungs- und Sol-Gelverfahren, bzw. Sprühreaktionsverfahren, zu welchen auch die Gasphasensynthese zählt.

In einer bevorzugten Ausführungsform der Erfindung wird das nanoskalige TiO₂ über ein Konzentrat in die Folie eingearbeitet Hierfür wird beschichtes nanoskaliges TiO₂, zunächst in einer größeren Mengen in eine Polymermatrix eingearbeitet und dann dieses sogenanntes Masterbatch zur Herstellung der Folie verwendet Matrixpolymer für derartige Konzentrate oder Masterbatche können Polyethylene oder Polypropylene sein, welche im allgemeinen mit dem Basispolymeren der Folie verträglich sein sollten. Die Konzentration an TiO₂ in den Konzentraten oder Masterbatchen liegt im allgemeinen in einem Bereich von 2 bis 30 Gew.-%, vorzugsweise 5 bis 25 Gew.-%, insbesondere 10 bis 25 Gew.-%, bezogen auf das Konzentrat

Die erfindungsgemäße Folie kann einschichtig oder mehrschichtig sein. Mehrschichtige Ausführungsformen sind aus einer Basisschicht und mindestens einer, vorzugsweise beidseitigen Deckschichten aufgebaut. Gegebenenfalls können zwischen der Basisschicht und der Deckschicht beidseitig Zwischenschichten angebracht sein. Die Basisschicht ist diejenige Schicht, welche die größte Schichtdicke aufweist und mindestens 40%, vorzugsweise 50 bis <100% der Gesamtdicke der Folie ausmacht. Deckschichten sind außenliegende Schichten. Zwischenschichten sind naturgemäß innenliegende Schichten, welche zwischen der Basisschicht und der Deckschicht liegen. Die erfindungsgemäße Folie kann somit eine, drei, vier oder fünf Schicht/en aufweisen. Gegebenenfalls können diese Grundstrukturen beispielsweise durch Beschichten oder Laminieren mit weiteren Schichten versehen werden.

Erfindungsgemäß kommt es für die gute UV-Barriere der vorliegenden Folie auf den Gesamtgehalt an nanoskaligem TiO₂ in der Folie an. Die entsprechende Menge an TiO₂ wird in die Zwischenschicht/en eingearbeitet. Für Ausführungsformen mit TiO₂ in der oder den Zwischenschichten beträgt der Gehalt 2 bis 5 Gew.-%, vorzugsweise 2,5 bis 4 Gew.-% bezogen auf das Gewicht der Zwischenschicht. Für weitere Ausführungsformen beträgt der Gehalt an TiO₂ in der Basisschicht 0,8 bis 3 Gew.-%, vorzugsweise 1,2 bis 2,2 Gew.-%, bezogen auf das Gewicht der Basisschicht. Es wurde gefunden, daß Ausführungsformen, welche nanoskaliges beschichtetes Titandioxid in der angegebenen Menge nur in der Zwischenschicht enthalten hinsichtlich Glanz, Trübung und gleichmäßiger Optik besonders vorteilhaft sind. Dieses Ergebnis überrascht, da bei dieser Ausführungsform die Konzentration bezogen auf die Schicht besonders hoch ist und eine vermehrter Agglomeration und eine verschlechterte Optik zu erwarten war.

Die Dicke der Folie liegt in einem Bereich von 5 bis 80 µm, vorzugsweise 10 bis 60µm, insbesondere 10 bis 30µm. Die Dicke der Zwischenschichten beträgt im allgemeinen 1 bis 10 µm, vorzugsweise 3 bis 8µm, die Dicke der Deckschichten beträgt 0,5 bis 5µm, vorzugsweise 1 bis 3µm, wobei die Basisschicht den Rest ausmacht.

Die Basisschicht der erfindungsgemäßen transparenten Folie enthält im allgemeinen mindestens 85 Gew.-%, vorzugsweise 90 bis <100 Gew.-%, insbesondere 98 bis <100 Gew.-%, jeweils bezogen auf die Schicht, eines Polyolefins. Polyolefine sind beispielsweise Polyethylene, Polypropylene, Polybutylene oder Mischpolymerisate aus Olefinen mit zwei bis acht C-Atomen, worunter Polyethylene und Polyproyplene bevorzugt sind.

Im allgemeinen enthält das Propylenpolymer mindestens 90 Gew.%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen und Butylen. Die Angaben in Gew.-% beziehen sich jeweils auf das Propylenpolymere.

Bevorzugt sind isotaktische Propylenhomopolymere mit einem Schmelzpunkt von 140 bis 170°C, vorzugsweise von 155 bis 165°C, und einen Schmelzflußindex (Messung DIN 53 735 bei 21,6 N Belastung und 230°C) von 1,0 bis 10 g/10 min, vorzugsweise von 1,5 bis 6,5 g/10 min. Der n-heptanlösliche Anteil des Polymeren beträgt im allgemeinen 1 bis 10 Gew.-%, vorzugsweise 2-5 Gew.-% bezogen auf das Ausgangspolymere. Die Molekulargewichtsverteilung des Propylenpolymeren kann variieren. Das Verhältnis des Gewichtsmittels M_{w} zum Zahlenmittel Mₙ liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren erreicht man beispielsweise durch dessen peroxidischen Abbau oder durch Herstellung des Polypropylens mittels geeigneter Metallocenkatalysatoren.

In einer weiteren Ausführungsform der Erfindung ist das eingesetzte Polypropylen der Basisschicht hochisotaktisch. Für derartige hochisotaktische Polypropylene beträgt der mittels ¹³C-NMR-Spektroskopie bestimmte Kettenisotaxie-Index des n-heptanunlöslichen Anteils des Polypropylens mindestens 95 %, vorzugsweise 96 bis 99 %.

Zusätzlich kann die Basisschicht der Folie übliche Additive wie Neutralisationsmittel, Stabilisatoren, Antistatika und/oder Gleitmittel in jeweils wirksamen Mengen enthalten. Bevorzugt enthält die Basisschicht eine Kombination aus Gleitmittel, wie z.B. Fettsäureamid und Antistatika wie z.B. tertiäre aliphatische Amine, sowie Neutralisationsmittel und Stabilisatoren.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit alpha-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Schicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phe-nolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g. Neutralisationsmittel werden üblicher weise in einer Menge von 0,01 bis 0,1 Gew.-% eingesetzt.

Die vorstehenden Angaben in Gew.-% beziehen sich jeweils auf das Gewicht der Basisschicht.

Die Deckschicht/en und die Zwischenschichten enthält/enthalten im allgemeinen 95 bis 100 Gew.-% eines Polyolefin, vorzugsweise 98 bis <100Gew.-% Polyolefin, jeweils bezogen auf das Gewicht der Deckschicht/en. Polyolefine für die Deckschichten und die Zwischenschichten sind beispielsweise Homopolymere des Polyethylens oder Polypropylens, sowie Mischpolymerisate mit Ethylen, Propylen oder Butylen als Comonomer.

Beispiele für bevorzugte olefinische Polymere der Deckschicht/en und der Zwischenschichten sind Propylenhomopolymere, Co- oder Terpolymere aus Ethylen-Propylen und/oder Butyleneinheiten oder Mischungen aus den genannten Polymeren. Hierunter sind bevorzugte Polymerisate Propylenhomopolymer, wie sie vorstehend für die Basisschicht beschrieben sind oder
- statistische Ethylen-Propylen-Copolymere mit einem Ethylengehalt von 1 bis 10 Gew.-%, bevorzugt 2,5 bis 8 Gew.-%, oder
- statistische Propylen-Butylen-1-Copolymere mit einem Butylengehalt von 2 bis 25 Gew.-%, bevorzugt 4 bis 20 Gew.-%, oder
- statistische Ethylen-Propylen-Butylen-1-Terpolymere mit einem Ethylengehalt von 1 bis 10 Gew.-% und einem Butylen-1-Gehalt von 2 bis 20 Gew.-%, oder
- eine Mischung oder. Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%.

Für die Zwischenschichten sind insbesondere die vorstehend beschriebenen Propylenhomopolymeren geeignet. Für siegelfähige Ausführungsformen der Folie werden bevorzugt Deckschichten aus Propylencopolymer oder Propylenterpolymer eingesetzt.

Die Angaben in Gew.-% beziehen sich jeweils auf das Gewicht des Polymeren. Die in der oder den Deckschicht eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53 735) gemessen. Gegebenenfalls können alle vorstehend beschriebenen Deckschichtpolymeren peroxidisch abgebaut sein, wobei der Abbaufaktor im allgemeinen in einem Bereich von 1 bis 15, vorzugsweise 1 bis 8 liegt.

Gegebenenfalls können der/den Deckschicht/en und der/den Zwischenschicht/en die vorstehend für die Basisschicht beschriebenen Additive wie Antistatika, Neutralisationsmittel, Gleitmittel und/oder Stabilisatoren, sowie den Deckschichten gegebenenfalls zusätzlich Antiblockmittel zugesetzt werden. Die Angaben in Gew.-% beziehen sich dann entsprechend auf das Gewicht der Deckschicht.

Geeignete Antiblockmittel für die Deckschicht sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, worunter Polymethylmethacrylate und Siliciumdioxid bevorzugt sind. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm.

Die erfindungsgemäßen Folien können nach an sich bekannten Stenter- oder Blasverfahren hergestellt werden.

Im Rahmen des Stenterverfahrens werden die den einzelnen Schichten der Folie entsprechenden Schmelzen durch eine Flachdüse coextrudiert werden, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasmacorona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Hierbei wird wie beim Extrusionsverfahren üblich das Polymere bzw. die Polymermischung der einzelnen Schichten in einem Extruder komprimiert und verflüssigt, wobei das nanoskalige TiO₂ und andere gegebenenfalls zugesetzte Additive bereits im Polymer bzw. in der Polymermischung enthalten sein können. Das nanoskalige Titandioxid kann wie beschrieben auch über ein Masterbatch zugesetzt werden.

Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 20 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 37 bis 50 mN/m, vorzugsweise 39 bis 45 mN/m.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 □C gemessen.

### Mittlere Teilchengröße

Die mittlere Teilchengröße der nanoskaligen Partikel in der Folie wurde mittels Rasterelektronenmikroskopie ermittelt.
Hierfür wird eine Probe in Wasser zur Vereinzelung der Teilchen dispergiert und auf einen Glasträger aufgebracht. Anschließend wird die Probe getrocknet und unter dem Rasterelektronenmikroskop untersucht. Hierfür werden durch eine geeignete Einstellung von Helligkeit und Kontrast die einzelnen Teilchen als Grauwertabbildung sichtbar gemacht. Über eine Fläche von 10mm² wird die jeweilige Fläche der vereinzelten Teilchen gemessen und der Teilchendurchmesser als Durchmesser eines flächengleichen Kreises ausgegeben. Diese Meßwerte werden nach Größenbereichen klassiert und geben die Verteilung der Teilchengröße an. Der mittlere Teilchendurchmesser wird als Mittelwert der Verteilungskurve bestimmt.

### Lichtdurchlässigkeit

Die Lichtdurchlässigkeit wird in Anlehnung an ASTM-D 1003-77 gemessen.

### Schmelzpunkt

DSC-Messung, Maximum der Schmelzkurve, Aufheizgeschwindigkeit 20 □C/min.

### Trübung

Die Trübung der Folie wurde nach ASTM-D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### UV Absorption

Die Messungen der UV Absorption erfolgt mit einem UV/VIS/NIR-Spektrometer (Lambda 9 bzw. 19 der Firma Perkin Elmer). Das Gerät besitzt zwei Strahlengänge (Zweistrahlspektrometer). Der eine Strahl ist der Referenzstrahl, der andere der Probenstrahl. Im Referenzstrahl befindet sich kein Referenzlösemittel da gegen Luft gemessen wird. In den Probenstrahl wird nach einem Abgleich des Spektrometers die Probe eingebracht.

Der Abgleich des Spektrometers erfolgt durch Einstellung des gewünschten Meßbereiches (in Ihrem Falle 200 bis 800 nm), wenn beide Strahlengänge frei sind, (das heißt Abgleich Luft gegen Luft) und anschließende Aufnahme der 100%-Linie im gewählten Wellenlängenbereich. Zur Messung wird die Probe in den Probenhalter, der sich im Probenstrahl befindet, eingesetzt. Anschließend erfolgt die Messung im gleichen Wellenlängenbereich in dem auch die 100%-Linie gemessen wurde. Die Messung erfolgt somit Probe gegen Luft. Abschließend folgt die Bearbeitung des Spektrums. Dies bedeutet Abspeichern und anschließendes Ausplotten des gemessenen Spektrums. Hierbei kann als y-Achse zwischen der Transmission bzw. Extinktion gewählt werden.

Die Erfindung wird nun an Hand von Beispielen noch weiter erläutert:

### Beispiel 1

Es wurde durch Coextrusion und anschließende stufenweise Orientierung in Längs-und Querrichtung eine transparente, fünfschichtige Folie mit Aufbau A/Z1/B/Z2/A mit einer Gesamtdicke von 21,5µm. Die Deckschichten hatten eine Dicke von jeweils 0,7µm, die Zwischenschichtdicken betragen jeweils 3,8µm.

### Basisschicht (B):

| | |
|---|---|
| Ca. 100 Gew.-% | isotaktisches Propylenhomopolymer mit einem Schmelzpunkt von 166 °C und einem Schmelzflußindex von 3,3 g/10min |

### Zwischenschichten:

| | |
|---|---|
| (Z1) ca.100 Gew.-% | isotaktisches Propylenhomopolymer mit einem Schmelzpunkt von 166 °C und einem Schmelzflußindex von 3,3 g/10min |
| | |
| (Z2) ca.97,5 Gew.-% ca. 2,5 Gew% | isotaktisches Propylenhomopolymer mit einem Schmelzpunkt von 166 °C und einem Schmelzflußindex von 3,3 g/10min gecoatetes nanoskaliges Titandioxid über 20%iges Masterbatch, |

### Deckschichten (A)

| | |
|---|---|
| Ca. 100 Gew.-% | Terpolymer (C2C3C4) mit einem Schmelzpunkt von 126°C und einem Schmelzflußindex von 6 g/10min |

Alle Schichten erhielten Stabilisatoren und Neutralisationsmittel in üblichen Mengen. Die Herstellungsbedingungen in den einzelnen Verfahrensschritten waren:

### Extrusion:

| | | | |
|---|---|---|---|
| Temperaturen | Basisschicht: | 260 °C | |
| | Zwischenschicht A: | 255 °C | |
| | Zwischenschicht B: | 250°C | |
| | Deckschicht A: | 265 °C | |
| | Deckschicht B: | 270°C | |
| | Temperatur der Abzugswalze: | | 20 °C |
| Längsstreckung: | Temperatur: | | 110 °C |
| | Längsstreckverhältnis: | | 4,5 |
| Querstreckung: | Temperatur: | | 170 °C |
| | Querstreckverhältnis: | | 8 |
| Fixierung: | Temperatur: | | 145 °C |
| | Konvergenz: | | 2 % |

Die biaxial orientierte Folie besitzt eine Transmission für UV-Strahlung von <40% im Bereich unter 320nm. Der Glanz (20°) ist 125, während die Trübung 4,6 beträgt.

### Beispiel 2

Es wurde eine fünfschichtige transparente Folie hergestellt wie in Beispiel 1. Dabei wurde die Dicke der Zwischenschicht Z2 von 3,7µm auf 6,5µm erhöht, wobei die Additivkonzentration von 2,5 Gew.-% bezogen auf die Schicht nicht geändert wurde. Die Herstellbedingungen in den einzelnen Verfahrensschritten waren wie in Beispiel 1. Die so hergestellte biaxial orientierte Folie besitzt eine UV-Transmission von kleiner 30% im Bereich < 320nm, während die Trübung 6,6 und der Glanz (20°) 125 beträgt.

### Beispiel 3

Es wurde eine fünfschichtige transparente Folie hergestellt wie in Beispiel 1. Dabei wurde nur der Additiv-Gehalt von 2,5% in der Zwischenschicht Z2 auf 5% erhöht. Die Herstellungsbedingungen in den einzelnen Verfahrensschritten waren wie in Beispiel 1. Die Folie besitzt eine UV-Transmission von kleiner 30% im Bereich <320nm und kleiner 20% im Bereich <300nm, während die Trübung 7,3 und der Glanz (20°) 123 beträgt.

### Beispiel 4

Es wurde eine fünfschichtige transparente Folie hergestellt wie in Beispiel 3. Dabei wurde nur die Dicke der Zwischenschicht A von 3,7µm auf 6,5µm erhöht. Die Herstellbedingungen in den einzelnen Verfahrensschritten waren wie in Beispiel 1. Die Folie besitzt eine UV-Transmission von kleiner 10% im Bereich < 320nm und sogar <5% im Bereich <300nm, während die Trübung 15 und der Glanz (20°) 122 beträgt.

### Vergleichsbeispiel 1

Es wurde eine fünfschichtige transparente Folie hergestellt wie in Beispiel 1. Im Unterschied zu Beispiel 1 enthält keine Schicht nano-Titandioxid. Die Herstellungsbedingungen in den einzelnen Verfahrensschritten waren wie in Beispiel 1. Die Folie zeigt fast keine UV-Absorption, d.h. die UV-Transmission ist größer als 80% im Bereich > 220nm. Die Trübung beträgt 1,8 und der Glanz (20°) 135.

### Vergleichsbeispiel 2

Es wurde eine fünfschichtige weiße Folie hergestellt mit mikroskaligem Titandioxid als Additiv in der Basis. Die Konzentration beträgt 8%, die Schichtdicke der Basis ist 22µm bei einer Foliengesamtdicke von 35µm. Der Weißgrad beträgt 90, Glanz (20°) ist 50. Die Folie ist nicht transparent, sondern weist ein typisch weiß, opakes Erscheinungsbild auf.

### Vergleichsbeispiel 3

Es wurde eine Folie wie in Beispiel 3 beschrieben hergestellt. Im Unterschied zu Beispiel 3 wurde ein ungecoatetes Ti02 eingesetzt. Die übrige Zusammensetzung der Folie sowie die Herstellbedingungen wurden nicht geändert. Die Folie besitzt eine UV-Transmission von kleiner 30% im Bereich < 320nm, die Trübung ca. 45 und der Glanz (20°) 90 beträgt. Zusätzlich war die Optik dieser Folie durch Ungleichmäßigkeiten beeinträchtigt.

## Patentansprüche

1. Transparente biaxial orientierte Polyolefinfolie, welche in mindestens einer Schicht nanoskaliges Titandioxid enthält, wobei der Gesamtgehalt an nanoskaligem Titandioxid in der Folie in einem Bereich von 0,5 bis 1,5 Gew.-%, bezogen auf das Gesamtgewicht der Folie liegt, **dadurch gekennzeichnet, daß** die Titandioxid Partikel eine Beschichtung aufweisen und die Folie mehrschichtig ist und eine Zwischenschicht aufweist, welche 2 bis 5 Gew.-% TiO_{2,} bezogen auf das Gewicht der Zwischenschicht, enthält und diese Zwischenschicht eine Dicke von von 1-10µm aufweist.

2. Folie gemäß Anspruch 1, **dadurch gekennzeichnet, daß** die Folie eine Trübung nach ASTM-D 1003-52 von < 6 aufweist.

3. Folie gemäß Anspruch 1 und/oder 2, **dadurch gekennzeichnet, daß** die UV Transmission der Folie in einem Wellenlängenbereich von 200 bis 350nm weniger als 30% beträgt.

4. Folie gemäß einem der Ansprüche 1 bis 3, **dadurch gekennzeichnet, daß** das nanoskalige TiO2 mit einer organischen Beschichtung versehen ist.

5. Folie gemäß einem der Ansprüche 1 bis 4, **dadurch gekennzeichnet, daß** die Folie, beidseitig Zwischenschichten aufweist und jede Zwischenschicht der Folie 1 bis 3,0 Gew.-% TiO2, bezogen auf das Gewicht der jeweiligen Zwischenschicht, enthält

6. Folie nach einem der Ansprüche 1 bis 5, **dadurch gekennzeichnet, daß** die Dicke der Folie 10 bis 80µm beträgt.

## Claims

1. Transparent biaxially-oriented polyolefin film, which contains nanoscale titanium dioxide in at least one layer, such that the total content of nanoscale titanium dioxide in the film lies in the region of 0.5 to 1.5% by weight, relative to the total weight of the film, **characterised in that** the titanium dioxide particles feature a layering and the film is multilayered and features an intermediate layer which contains 2 to 5% by weight TiO₂ relative to the weight of the intermediate layer, and this intermediate layer has a thickness of 1-10µm.

2. Film according to claim 1, **characterised in that** the film features a turbidity of < 6 according to ASTM-D 1003-52.

3. Film according to claim 1 and/or 2, **characterised in that** the UV transmission of the film in a wavelength range of 200 to 350nm comes to less than 30%.

4. Film according to one of the claims 1 to 3, **characterised in that** the nanoscale TiO₂ is provided with an organic layering.

5. Film according to one of the claims 1 to 4, **characterised in that** the film features intermediate layers on both sides and each intermediate layer of the film 1 contains up to 3.0% by weight TiO₂, relative to the weight of the intermediate layer in each case.

6. Film according to one of the claims 1 to 5, **characterised in that** the thickness of the film comes to 10 to 80µm.

## Revendications

1. Film de polyoléfine transparent orienté biaxialement, présentant au moins une couche de dioxyde de titane à l'échelle du nanomètre, la teneur totale en dioxyde de titane à l'échelle du nanomètre dans le film étant comprise entre 0,5 et 1,5 % en poids par rapport au poids total du film, **caractérisé en ce que** les particules de dioxyde de titane présentent un revêtement et **en ce que** le film se compose de plusieurs couches et présente une couche intermédiaire contenant entre 2 et 5 % en poids de TiO₂ par rapport au poids de la couche intermédiaire, laquelle présente une épaisseur comprise entre 1 et 10 µm.

2. Film selon la revendication 1, **caractérisé en ce que** le film présente une transparence < 6 conformément à la norme ASTM-D 1003-52.

3. Film selon la revendication 1 et/ou 2, **caractérisé en ce que** la transmission UV du film dans une gamme de longueur d'onde comprise entre 200 et 350 nm est inférieure à 30%.

4. Film selon l'une des revendications 1 à 3, **caractérisé en ce que** le TiO₂ à l'échelle nanométrique est doté d'un revêtement organique.

5. Film selon l'une des revendications 1 à 4, **caractérisé en ce que** le film présente sur ses deux côtés des couches intermédiaires et chaque couche intermédiaire du film contient 1 à 3,0 % en poids de TiO₂ par rapport au poids de la couche intermédiaire respective.

6. Film selon l'une des revendications 1 à 5, **caractérisé en ce que** l'épaisseur du film est comprise entre 10 et 80 µm.
